# NEUE EUROPÄISCHE PATENTSCHRIFT

(11) **EP 1 781 981 B2**
(45) Veröffentlichungstag und Bekanntmachung des Hinweises auf die Entscheidung über den Einspruch: **23.03.2022**
(45) Hinweis auf die Patenterteilung: 18.07.2018
(21) Anmeldenummer: 05787611.2
(22) Anmeldetag: 23.08.2005
(51) Int. Cl.: F16P 3/14

(54) **VORRICHTUNG UND VERFAHREN ZUR SICHERUNG EINES INDUSTRIEROBOTERS**
DEVICE AND METHOD FOR SAFEGUARDING AN INDUSTRIAL ROBOT
DISPOSITIF ET PROCEDE DE SECURITE POUR UN ROBOT INDUSTRIEL

(30) Priorität: 27.08.2004 DE 102004041821
(43) Veröffentlichungstag der Anmeldung: 09.05.2007
(73) Patentinhaber: ABB Schweiz AG, 5400 Baden (CH)
(72) Erfinder: MERTE, Rolf, 69168 Wiesloch (DE); MATTHIAS, Björn, 76669 Bad Schönborn (DE); KOCK, Sönke, 72463 Västeras (SE)
(74) Vertreter: Maiwald Patent- und Rechtsanwaltsgesellschaft mbH
(86) Internationale Anmeldenummer: PCT/EP2005/009098
(87) Internationale Veröffentlichungsnummer: WO 2006/024431

(56) Entgegenhaltungen:
- EP-A- 0 435 816
- DE-A1- 10 152 543
- DE-A1- 10 324 628
- DE-A1- 19 527 832
- DE-A1- 19 903 210
- FR-A- 2 478 514
- JP-A- 2002 264 070
- US-A- 4 804 860
- US-A- 5 165 064
- US-A- 5 758 298
- US-A1- 2002 186 299
- Ross: "OTS-Systeme in der Robotik, Roboter Ohne Trennende Schutzeinrichtungen", BKM BERICHTE, Herbert Ulz Verlag, - 25 June 2002 (2002-06-25), ISBN: 3-8316-0901-2

## Beschreibung

Die Erfindung betrifft eine Vorrichtung zur Sicherung eines Industrieroboters mit beweglichen Teilen gemäß Anspruch 1, sowie weiterhin ein Verfahren zur Sicherung eines Industrieroboters mit beweglichen Teilen gemäß dem Oberbegriff des Anspruchs 11. Unter dem Begriff Handhabungsgeräte sollen hier in Anlehnung an die Darstellung in "Automatisierungstechnik in der Fertigung, 2. Auflage 1996, Verlag Europa Lehrmittel, ISBN 3-8085-5152-6, Seite 317 bis 318" sowohl maschinell gesteuerte, festprogrammierte sog. Pick-and-Place Geräte, beispielsweise Geräte zum Beschicken einer Presse, zur Montage von Serienfabrikaten oder zum Verpacken von Serienprodukten, verstanden werden, als auch universell einsetzbare Bewegungsautomaten mit mehreren Achsen, deren Bewegungen hinsichtlich der Bewegungsfolge und Bewegungsbahn frei programmierbar sind, sog. Industrieroboter.

Insbesondere Industrieroboter werden in vielen industriellen Bereichen eingesetzt. Sie bewegen schwere Teile, arbeiten unter gesundheitsgefährdender Atmosphäre, sind aufgrund ihrer hohen Wiederholgenauigkeit optimal geeignet, um mit hoher Geschwindigkeit reproduzierbare Prozesse auszuführen und befinden sich bis auf Wartungsphasen ständig im Betrieb.

Um die Sicherheit von Menschen in der Nähe von gattungsgemäßen Handhabungsgeräten zu gewährleisten, hat die Berufsgenossenschaft klare und strenge Richtlinien zum Personenschutz erlassen. Der momentane Stand der Technik bei der Umsetzung dieser Richtlinien führt vielfach zum Einsatz von trennenden Schutzeinrichtungen um den Bereich des Handhabungsgerätes. Der Gefahrenbereich wird mit Hilfe eines mechanischen Zaunes abgegrenzt. Dadurch wird ein Zugriff in ein laufendes Maschinensystem verhindert, da die trennenden Schutzeinrichtungen Bediener und Anlage lokal separiert. In der Industrie werden solche Sicherheitssysteme benutzt, weil sie maximale Sicherheit gewährleisten und einfach zu realisieren sind. Die Zugänge zu der gesicherten Anlage, müssen so gestaltet sein, dass ein unbemerkter Zugriff auf die Maschine verhindert wird. Hier werden Schutztüren verwendet, die ihren Zustand (offen oder geschlossen) mittels eines Schalters an eine Not-Aus-Steuerung weiterleiten und dadurch den Arbeitsprozess der Maschine stillsetzen können. Alternativ zu den Zäunen werden Lichtgitter oder Lichtzäune, realisiert durch Lichtschranken oder Laserscanner, eingesetzt. Diese schalten die Maschine entweder sofort aus oder in einen sicheren Zustand, beispielsweise in eine stark verlangsamte Fahrweise, wenn ein Objekt den Strahlengang unterbricht.

Wird eine Anlage mit einer trennenden Schutzvorrichtung versehen, muss die Sicherheit der Konfiguration von einer autorisierten Person abgenommen werden. Des weiteren behindert der Zaun, insbesondere bei Robotern, bei mancher Anwendung eine flexible Handhabung des Roboters, da bei örtlicher Verlagerung des Roboters der Zaun neu angepasst und mit Sicherheitsschaltern verdrahtet werden muss. Diese Aufwände führen zu zusätzlichen Kosten und verlängerten die Rüstzeiten. Dies gilt besonders für Anlagen, die zum flexiblen Arbeiten beweglich gestaltet sind, um an verschiedenen Orten zum Einsatz kommen zu können, sogenannte portable Robotersysteme, da sich hier der Gefahrenbereich mit jeder Ortsverlagerung des Industrieroboters ändert und dadurch die trennende Schutzeinrichtung neu konfiguriert und neu abgenommen werden muss. Das ist bezüglich der flexiblen Einsetzbarkeit eines Industrieroboter-Systems sehr ungünstig.

Weiterhin behindern trennende Schutzeinrichtungen eine Interaktion mit der Maschine. Das kann in einigen Fällen dazu führen, dass Sicherheitsfunktionen aus Gründen der Bequemlichkeit überbrückt werden. Dabei gehen sämtliche Sicherheitsfunktionen verloren, was aus sicherheitstechnischer Betrachtungsweise ein inakzeptabler Zustand ist.

Aus der DE 101 52 543 ist ein Verfahren und eine Vorrichtung zum Steuern einer sicherheitsrelevanten Funktion einer Maschine bekannt, bei der ein Überwachungsbereich von wenigstens einem orts- und zeitauflösenden Sensor überwacht wird. Mit dem Sensor werden die Position, die Bewegungsrichtung und/oder die Bewegungsgeschwindigkeit einer Person erkannt. Eine Sicherheitsgrenze oder ein Sicherheitsbereich begrenzt einen Gefahrenbereich und definiert einen Sicherheitsabstand zur Maschine. Bei Eindringen in den Gefahrenbereich wird die sicherheitsrelevante Funktion ausgelöst, beispielsweise ein Notstopp. Die Lage der Sicherheitsgrenze und/oder die Ausdehnung des Sicherheitsbereiches wird in Abhängigkeit von der Position, der Bewegungsrichtung und/oder der Bewegungsgeschwindigkeit situationsbedingt variabel festgelegt. Als orts- und zeitauflösender Sensor wird eine Kamera oder ein Laser-Scanner eingesetzt. Der Sensor überwacht den gesamten Arbeitsbereich, inklusive des Roboterarms. In einer Auswerteeinheit werden aus den Sensorsignalen die Position, die Bewegungsrichtung und/ oder die Bewegungsgeschwindigkeit ermittelt. Das dabei konkret anzuwendende Verfahren wird in der DE 101 52 543 A1 nicht näher beschrieben, implizit erschließt es sich dem Fachmann allerdings als hochkomplexes Verfahren der Real-Time Bildverarbeitung, wozu ein erheblicher Aufwand an Rechenkapazität und Hardware in der Auswerteeinheit erforderlich ist. Ein spezielles Objektklassifizierungssystem wird benötigt, um zwischen Personen und Gegenständen zu unterscheiden, und um die sicherheitsrelevante Funktion entsprechend abzustimmen. Auch dazu bedarf es eines erheblichen zusätzlichen Aufwandes an Rechnerleistung und Hardware. Weiterhin ist ein System gemäß der DE 101 52 543 für portable Roboteranwendungen nicht geeignet, denn bei jedem Positionswechsel des Roboters muß die Kamera wieder neu einjustiert und eingestellt werden, was einen erheblichen Aufwand an Bedienerleistung erfordert.

US 4,804,860 offenbart eine Vorrichtung zur Sicherung eines Industrieroboters gemäß dem Oberbegriff des Anspruchs 1.

Vor dem Hintergrund des vorbekannten Standes der Technik ist es daher Aufgabe der Erfindung, eine Vorrichtung und ein Verfahren zur Überwachung des Arbeitsraumes um eine Handhabungsmaschine, insbesondere um einen Roboter, anzugeben, so dass die bis dahin notwendigen Schutzzäune überflüssig werden und dennoch maximale Sicherheit für das Bedienpersonal gegeben ist, wobei die Vorrichtung vereinfacht aufgebaut sein soll und auch für portable Robotersysteme geeignet ist.

Die Aufgabe wird bezüglich der Vorrichtung gelöst durch die Merkmale des Anspruchs 1, und bezüglich des Verfahrens durch die kennzeichnenden Merkmale des Anspruchs 11. Erfindungsgemäß also umfasst die Sicherheitssensorik berührungslose Näherungssensoren, so dass ein sicherheitsrelevanter Teil des Arbeitsraumes des Handhabungsgerätes durch die Detektionsbereiche der Näherungssensoren erfasst wird. Die Sicherheitssensorik weist eine Kombination aus orts- und zeitauflösenden Sensoren und berührungsfreien Näherungssensoren auf, oder kann eine Kombination aus orts- und zeitauflösenden Sensoren, berührungsfreien Näherungssensoren und mechanischen Endschaltern oder Kontaktmatten umfassen.

Die Näherungssensoren können dabei Informationen über das Vorhandensein eines Objektes in ihrem jeweiligen Detektionsbereich und über den Abstand des Objektes von dem jeweiligen Sensor an die Sicherheitssteuerung übermitteln. Dabei können gemäß einer weiteren sehr vorteilhaften Ausgestaltungsmöglichkeit der erfindungsgemäßen Vorrichtung die Näherungssensoren Informationen über das Vorhandensein eines in ihrem Detektionsbereich sich befindlichen Objektes bei der Übermittlung an die Sicherheitssteuerung unterdrücken, wenn das Objekt sich in einem bestimmten zugelassenen Abstandsbereich von dem Näherungssensor befindet.

Somit sind die seither notwendigen Schutzzäune überflüssig. Gleichwohl müssen vorhandene Schutzzäune, zum Beispiel bei einer nachträglichen Installation der erfindungsgemäße Vorrichtung, nicht entfernt werden. Es besteht dann eine vorteilhafte zusätzliche Sicherheit.

Die Näherungssensoren können Näherungsschalter mit variabel einstellbaren Schaltabständen sein, so dass sie Informationen über das Vorhandensein eines Objektes in ihrem jeweiligen Überwachungsbereich und in einer dem jeweils eingestellten Schaltabstand entsprechenden Entfernung von dem Näherungssensor an die Sicherheitssteuerung übermitteln. Erfindungsgemäß ist der sicherheitsrelevante Teil des Arbeitsraumes in Sektoren unterteilt, wobei jedem Sektor ein berührungsloser Näherungssensor oder ein orts- und zeitauflösender Sensor als Sektorüberwachungssensor zugeordnet ist, dessen Detektionsbereich mit dem ihm zugeordneten Sektor korrespondiert. Dabei ist jeder einem Näherungssensor zugeordnete Sektor in wenigstens zwei Zonen unterschiedlicher Sicherheitsrelevanz unterteilt wobei die Sicherheitsrelevanz mit dem Abstand von den beweglichen Teilen des Industrieroboters korrespondiert.

Insbesondere vorteilhaft ist eine erfindungsgemäße Vorrichtung, bei der jeder einem Näherungssensor zugeordnete Sektor in eine Arbeitszone, eine Sicherheitszone und eine Gefahrenzone unterteilt ist, derart, dass bei Anwesenheit eines Menschen in der Gefahrenzone das Handhabungsgerät ausgeschaltet wird, und bei Anwesenheit eines Menschen in der Sicherheitszone das Handhabungsgerät in eine verlangsamte Sicherheitsbetriebsweise übergeht.

Die Näherungssensoren können Ultraschallsensoren oder Mikrowellensensoren umfassen.

Das Handhabungsgerät ist ein frei programmierbarer Industrieroboter. Bei dieser Ausführungsform können in sehr vorteilhafter Weise die Sicherheitssensoren an der Roboter-Basis angebracht sein, derart dass der Arbeitsraum des Roboters von der Basis ausgehend von innen nach außen überwacht wird. Informationen über die Position des Roboterarmes können dabei von Positionssensoren an den Roboterachsen erfasst und an die Sicherheitssteuerung übermittelt werden.

Bei einem erfindungsgemäßen Verfahren zur Sicherung eines Industrieroboters mit beweglichen Teilen wird eine Sicherheitssensorik zur Detektion von Objekten im Arbeitsraum des Industrieroboters eingesetzt, derart dass eine Sicherheitssteuerung mit der Industrieroboter-Steuerung zusammenwirkt und von der Sicherheitssteuerung in Abhängigkeit von Signalen der Sicherheitssensorik sicherheitsrelevante Industrieroboter-Funktionen gesteuert werden. Dabei werden zonenweise Informationen über die Anwesenheit von Personen und/oder Objekten im Arbeitsraum des Industrieroboters von der Sicherheitssensorik ermittelt und von der Sicherheitssteuerung übermittelt. Weiterhin werden zonenweise Informationen über die Position des oder der beweglichen Teile des Industrieroboters von dem Industrieroboters an die Sicherheitssteuerung übermittelt, und von der Sicherheitssteuerung werden im Zusammenwirken mit der Industrierobotersteuerung in Abhängigkeit von den beiden Informationen zonenweise sicherheitsrelevante Industrieroboter-Funktionen gesteuert. Der Arbeitsraum des freien programmierbaren Industrieroboter ist in Sektoren und jeder Sektor weiter in wenigstens zwei Zonen unterschiedlicher, mit dem Abstand von dem beweglichen Roboterarm korrespondierender, Sicherheitsrelevanz unterteilt. Informationen über die Position des Roboterarmes werden dabei von Positionssensoren an den Roboterachsen erfasst und an die Sicherheitssteuerung übermittelt.

Weiterhin kann jeder Sektor in eine Arbeitszone, eine Sicherheitszone und eine Gefahrenzone unterteilt werden.

Bei von der Sicherheitssensorik erkannter Anwesenheit eines Menschen in der Gefahrenzone wird dann der Roboter ausgeschaltet, und bei Anwesenheit eines Menschen in der Sicherheitszone kann der Roboter von der Roboter-Steuerung in eine verlangsamte Sicherheitsbetriebsweise gesteuert werden.

Ebenso kann in einer weiteren Variante der Erfindung bei von der Sicherheitssensorik erkannter Anwesenheit eines Menschen in einer Sicherheitszone und gleichzeitiger von den Positionssensoren erfasster Positionierung des Roboterarmes in derselben oder einer benachbarten Sicherheitszone der Roboter von der Roboter-Steuerung in eine verlangsamte Sicherheitsbetriebsweise gesteuert werden.

Gemäß einer sehr vorteilhaften Ausgestaltung der Erfindung kann die Sicherheitssensorik kann derart selektiv angebracht werden, dass eine gezielte Überwachung definierter Bereiche erreicht wird und eine Eigenstörung (d.h., eine Auslösung der sicherheitsrelevanten Roboterfunktion durch den Roboterarm selbst) oder eine Störung durch von dem Roboter zu handhabende Teile oder Zuführvorrichtungen für solche Teile nicht möglich ist. Durch einen charakteristischen Öffnungswinkel der Sensoren wird der zu überwachende Bereich in Sektoren unterteilt. Der Wirkungsbereich der Sensoren kann mit einer Fensterfunktion(Realisierung durch Elektronik) versehen werden, welche diejenigen Bereiche ausblendet, in denen sich der Roboter bewegt, oder in denen sich die von dem Roboter zu handhabende Teile oder Zuführvorrichtungen für solche Teile befinden.

Neben der Vermeidung kann ebenfalls ein Sensorsignal unterdrückt werden, sofern sich der Roboter in den Bereich eines Sensors hineinbewegt. Dies kann über positionsgebende Sensoren, z.B. Positionsschalter, an geeigneten Roboterachsen realisiert werden. Die logische Verknüpfung verschiedener Sensordaten erfolgt dabei in der Sicherheitssteuerung.

Aus den ermittelten Sensordaten wird durch Auswertung der Positionsdaten der Bereich herausgefiltert indem sich der Roboter befindet. Dazu erfolgt ein Abgleich und Vergleich der ermittelten Sensordaten mit den Positionsdaten, die von den positionsgebenden Sensoren des Roboters geliefert werden. Weiter kann ein berücksichtigtes numerisches Modell der Robotergeometrie eine noch genauere Differenzierung zwischen echter Störung und Eigenstörung ermöglichen.

Bei einer statischen Anordnung (keine permanente Änderung der Geometrie des Arbeitsplatzes) kann alternativ die Umgebung, einschließlich der von dem Roboter zu handhabenden Teile oder Zuführvorrichtungen für solche Teile einmal erfasst und die so erhaltenen Werte als Referenz verwendet werden. Im eigentlichen Betrieb werden nur noch Veränderungen gegenüber den Referenzwerten berücksichtigt.

Insgesamt besteht der Vorteil der erfindungsgemäßen Vorrichtung darin, die Möglichkeit des flexiblen und selektiven Überwachens des zu überwachenden Arbeitsraumes eines Handhabungsgerätes mit der Möglichkeit des Ausblendens verschiedener Bereiche zu schaffen. Dazu wird eine durch Sensoren realisierte Sicherheitsvorrichtung zum Schutz von Personen beschrieben, diese bezieht sich auf Handhabungssysteme, portabel, mobil oder stationär, insbesondere Roboter.

Durch die Erfindung wird eine Sicherheitssensorik geschaffen, mit der die mechanische trennende Schutzeinrichtung um das Handhabungsgerät herum durch eine flexiblere und vom Gesamtaufwand her stark vereinfachte und billigere Sicherungsvorrichtung ersetzt wird. Das Bedienpersonal und die Maschine müssen nicht mehr physikalisch getrennt sein. Die erfindungsgemäße Sicherheitssensorik erlaubt den Aufenthalt einer Person in einer Sicherheitszone des Handhabungsgerätes bei gleichzeitiger Arbeit der Maschine in einem anderen Teil des Gefahrenbereichs. Dadurch können neben den schon erwähntem Vorteilen auch weiterhin Vorteile von Menschen mit denen der Maschinen in einem Arbeitsprozess vereint werden. Bewegt sich der Mensch in einen für ihn gefährlichen Bereich, so schaltet der Roboter aus, bzw. verlangsamt seine Geschwindigkeit auf eine zugelassene maximale Geschwindigkeit, bei der keine Sicherheitsmassnahmen erforderlich sind.

Die erfindungsgemäße Sicherheitssensorik umfasst allgemein Sensoren zur sicheren Personendetektion. Dabei erfolgt erfindungsgemäß ein Zusammenwirken verschiedener Sensoren z.B. Ultraschall, Laserscanner, Lichtvorhang, Kontaktmatten, Radar usw. Erfindungsgemäß wird eine Kombination verschiedener Sensoren, die den selben Sicherheitsbereich überwachen, aber auf der Basis eines unterschiedlichen physikalischen Prinzips arbeiten, eingesetzt. Durch diese Redundanz wird die Sicherheit weiter erhöht.

Die Ausgangssignale der Sicherheitssensorik werden derart verarbeitet, dass die Sensoren im industriellen Bereich kompatibel einsetzbar sind. Bei den erfindungsgemäß eingesetzten Näherungssensoren kann eine Signalverarbeitungselektronik das Ausgangssignal auf ein standardisiertes analoges Strom- oder Spannungssignal umformen, welches proportional zur detektierten Entfernung ist. Außerdem können Sicherheitssensoren als digitale Schalter eingesetzt werden, d.h. sie lösen bei einer definierten Entfernung aus. Eine Elektronik kann auch hier das Ausgangssignal in ein standardisiertes digitales Signal umwandeln. Die erwähnten erfindungsgemäß eingesetzten Näherungssensoren sind vielfach heute bereits verfügbar und im industriellem Einsatz in Automatisierungssystemen bewährt.

Die Sicherheitssensorik zur Detektion von Personen gibt ihre Information an eine Sicherheitssteuerung, welche beispielsweise eine Sicherheits-SPS (Speicherprogrammierbare Steuerung), sein kann. Das kann eine redundant ausgelegte Sicherheitssteuerung sein, die direkt mit der Steuerung des Roboters verbunden ist und gegebenenfalls auch selbst eine übergeordnete Not-Aus-Funktion steuern kann.

Neben den genannten berührungslosen Näherungssensoren können auch andersartige Sensoren oder weitere Sicherheitsvorkehrungen, wie z.B. Kontaktmatten, mit der Sicherheitssteuerung verbunden werden. Das in der Sicherheitssteuerung abgelegte Programm steuert die notwendigen Aktionen, sofern ein Sicherheitssensor ein Signal liefert.

Eine vorteilhafte Möglichkeit, Näherungssensoren für eine erfindungsgemäße flexible Sicherheitssensorik zu realisieren, bieten Mikrowellen, d.h. elektromagnetische Wellen im GHz-Bereich. Elektromagnetische Wellen breiten sich mit Lichtgeschwindigkeit im Raum aus und sind störunanfällig bezüglich typischer Umwelteinflüsse, wie z.B. Temperatur- und Druckschwankungen, Sichtverhältnisse u.ä.. Mit der Verbreitung im Mobilkommunikations- und Satellitenbereich sind Mikrowellenbauteile zudem sehr kostengünstig geworden, so dass hierdurch ein preiswerter und sicherer Sensor für die Personen- und Störkörperdetektion realisiert werden kann.

Eine mögliche Betriebsart für einen mikrowellenbasierten Näherungssensor ist die sogenannte FMCW-Methode (frequency modulated continuous wave) oder auch "frequency wobbling". Bei einem Mikrowellen-Sensor in dieser Betriebsart wird ein Signal generiert, welches linear die Frequenz ändert. Die Änderung erfolgt kontinuierlich und zyklisch, d.h. ein definiertes Frequenzband wird auf- und abgefahren. Die Breite und der Bereich des Frequenzbandes legt die maximal zu erreichende Auflösung, d.h. die Genauigkeit des Sensors fest.

Dieses Signal wird über eine mit dem Sensor verbundene Antenne abgestrahlt. Trifft es auf ein Hindernis, so wird ein Teil der Leistung reflektiert und zurück zum Empfänger geschickt. Dort wird die Frequenz des empfangenen Signals mit der Frequenz des aktuellen Sendesignals verglichen. Die reflektierte Welle hat eine andere Frequenz als die momentan aktuell gesendete Welle. Die Differenz der Frequenz von Sende- und Empfangssignal ist demnach proportional zur Laufzeit und somit proportional zur Entfernung.

Das Spektrum des Differenzsignals enthält die gesuchte Entfernungsinformationen aus der Umgebung des Sensors. Die Signalauswertung erfolgt durch eine schnelle Fouriertransformation (FFT); das resultierende Signal des Sensors repräsentiert somit die Entfernung des erkannten Objektes von dem Sensor.

Für Anwendungen, bei denen man mit der mikrowellen-basierten Sicherheitssensorik zusätzlich noch Objekt-Annäherungen aus verschiedenen Richtung erkennen möchte, muss man zusätzlich noch eine tangentiale Auflösung des Sensorsignals implementieren. Das kann auf drei verschiedene Arten geschehen.

Bei einer ersten Art wird, wie bei einem Luftüberwachungsradar, der Mikrowellensensor auf einer verschwenkbaren Vorrichtung befestigt. Der Verschwenkungswinkel wird mittels eines Winkelgebers erfasst. Auf diese Art kann ein schmaler Antennenhauptstrahl mechanisch geschwenkt werden und den Detektionsbereich des Mikrowellen-Sensors somit intangentialer Richtung abtasten. Über den Winkelgeber wird dann bei erkanntem Objekt die Richtung erfasst, in der sich das Objekt befindet.

Eine zweite Möglichkeit, den Hauptstrahl zu schwenken, besteht darin, einzelne Elemente eines Antennenarrays über ein veränderliches Phasenschiebernetzwerk anzusteuern, und so über die Änderung der Phasen die Antennen-Hauptkeule des Mikrowellen-Sensors sozusagen auf elektronischem Wege zu verschwenken. Auf diese Art wird eine mechanische Tangential-Abtastung in wesentlich flexiblerer Weise elektronisch realisiert. Aufgrund der fehlenden Reibung ist die Abtastgeschwindigkeit dabei wesentlich schneller als bei mechanisch bewegten Antennen.

Eine dritte Möglichkeit besteht darin, mehrere Sensoren mit breiterem Hauptstrahl zu benutzen. Durch eine Sektorenaufteilung ereicht man eine Zuordnung des reflektierten Signals zu einem Sensor und somit eine grobe Richtungsangabe. Eine Intensitätsauswertung der unterschiedlichen Sektorsignale kann zur Richtungsbestimmung verwendet werden.

Eine weitere vorteilhafte Möglichkeit, Näherungssensoren für eine erfindungsgemäße flexible Sicherheitssensorik zu realisieren, bietet die Objektdetektion mit Ultraschall. Diese basiert bekanntermaßen auf dem Effekt, dass Schallwellen an festen Körpern reflektiert werden. Da die Geschwindigkeit, mit der sich Schall ausbreitet, bekannt ist, kann aus der Laufzeit die Entfernung ermittelt werden. Ultraschallsensoren haben einen Öffnungswinkel von ca. 10° bis 40°, bevorzugt von ca. 12° bis 30°. Durch eine Verwendung von Ultraschallsensoren wird der zu überwachende Bereich somit in Sektoren mit Öffnungswinkeln von etwa 10° bis 40°, bevorzugt von ca. 12° bis 30° unterteilt. Durch diese Unterteilung ist eine grobe tangentiale Auflösung gegeben.

Um von der Maschine zu handhabende Teile oder Zuführeinrichtungen für solche Teile oder beispielsweise den Roboterarm selbst, wenn sie sich im überwachten Bereich befinden, nicht auch mit zu erkennen und die Sicherheitsfunktion auszulösen, bedarf es Überlegungen, wie das umgangen werden kann. Steuergeräte für Ultraschallsensoren bieten die Möglichkeit, den Wirkungsbereich mit einer Fensterfunktion zu versehen, d.h., dadurch können bestimmte Bereiche, wie beispielsweise die o.g., ausgeblendet werden.

Erfindungsgemäß ist die Kombination eines Ultraschall- oder Mikrowellen-sensors für die Überwachung einer Zone mit einem weiteren Sensor, der dieselbe Zone überwacht, aber auf Basis eines unterschiedlichen physikalischen Prinzips arbeitet, z.B. ein PIR (Passivinfrarot)- Sensor oder ein Ultraschallsensor, vorgesehen. Redundanz erhöht dabei auch hier die Sicherheit.

Weitere vorteilhafte Ausgestaltungen und Verbesserungen der Erfindung und weitere Vorteile sind den weiteren Unteransprüchen zu entnehmen.

Anhand der Zeichnungen, in denen drei Ausführungsbeispiele der Erfindung dargestellt sind, sollen die Erfindung sowie vorteilhafte Ausgestaltungen der Erfindung näher erläutert und beschrieben werden.

Es zeigen:
- Fig. 1: eine erfindungsgemäße Vorrichtung, mit Ultraschallsensoren und einem Laserscanner,
- Fig. 2: eine Variante der erfindungsgemäßen Vorrichtung nach Fig.1, sowie
- Fig. 3: ein Blockschaltbild der erfindungsgemäßen Vorrichtung nach Fig. 1.

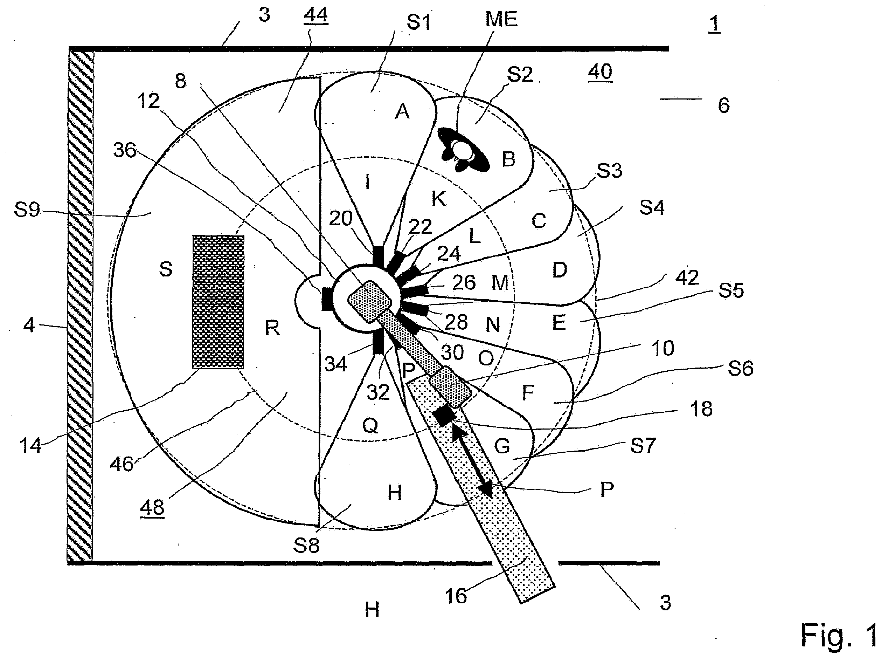

Fig. 1 zeigt in Aufsicht eine Fertigungszelle 1, mit seitlichen Begrenzungseinrichtungen 3 und einer rückwärtigen Begrenzungseinrichtung 4. Die rückwärtige Begrenzungseinrichtung 4 kann ein Zaun sein, die seitlichen Begrenzungseinrichtungen 3 können beispielsweise einfache farbige Linien auf dem Werkhallenboden, oder auch Lichtschranken sein. Von der Vorderseite 6 ist die Fertigungszelle zugänglich und begehbar.

In der Fertigungszelle steht ein Industrieroboter 8 mit einem an der Roboterhand 10 befestigten Montagewerkzeug. Dies kann beispielsweise eine Schweißzange oder ein Bohrer oder ein anderes, an sich bekanntes robotergeeignetes Werkzeug sein. Das begehbare Innere der Fertigungszelle bildet den Arbeitsraum 40 des Roboters 8.

Der Roboter 8 ist auf einer Basis 12 um eine vertikale Drehachse drehbar gelagert. Die Basis 12 kann fest mit dem Boden der Fertigungszelle 1 verbunden sein. Es kann sich aber auch um einen portablen Roboter handeln; dann ist die Basis verschieblich ausgeführt und der Roboter kann an verschiedene Positionen innerhalb der Fertigungszelle 1 oder sogar an Positionen außerhalb der Fertigungszelle 1 verbracht werden.

Innerhalb des Arbeitsraumes 40 gibt es einen durch eine Gefahrenbereichs-Grenzlinie 46 begrenzten Gefahrenbereichs 48. Befindet sich ein Mensch innerhalb des Gefahrenbereichs 46, so befindet er sich in Reichweite des Roboterarmes und es besteht für ihn große Gefahr, mit dem von dem Roboterarm im Zuge von dessen Bewegungen auf seiner einprogrammierten Bewegungsbahn zu kollidieren.

Ein sich an den Gefahrenbereich nach außen anschließender Sicherheitsbereich 44 ist dadurch charakterisiert, dass ein Mensch ME sich möglicherweise schnell und unerwartet aus diesem Sicherheitsbereich in den Gefahrenbereich hinein begibt und dort dann mit dem Roboterarm kollidiert. Eine Sicherheitsbereichs-Grenzlinie 42 grenzt den Sicherheitsbereich zum diesen außen umgebenden Arbeitsbereich ab. In dem Arbeitsbereich 40 ist der Aufenthalt eines Menschen unkritisch, es besteht hier keine Gefahr.

Der Roboter 8 bearbeitet mit seinem Werkzeug 10 Werkstücke 18, die ihm auf einer Werkstückzuführeinrichtung 16, hier beispielsweise einem Förderband, von außerhalb der Fertigungszelle unter Durchquerung des Arbeits- und Sicherheitsbereiches zugeführt und nach der Bearbeitung auch wieder abgeführt werden. Zwischen der Rückwand 4 und dem Roboter 8 befindet sich eine Werkzeug-Station 14, die der Roboterarm von Zeit zu Zeit anfahren muß, um sein Werkzeug zu wechseln.

Die hier gezeigte Fertigungszellenkonfiguration ist selbstverständlich nur als schematisches Beispiel zu betrachten, an dem die Erfindung sowie deren Vorteile exemplarisch erläutert werden sollen. Selbstverständlich ist die technische Lehre der Erfindung auch auf alle anderen denkbaren und möglichen Konstellationen von Fertigungszellen mit Robotern oder auch mit Pick-and-Place Geräten übertragbar.

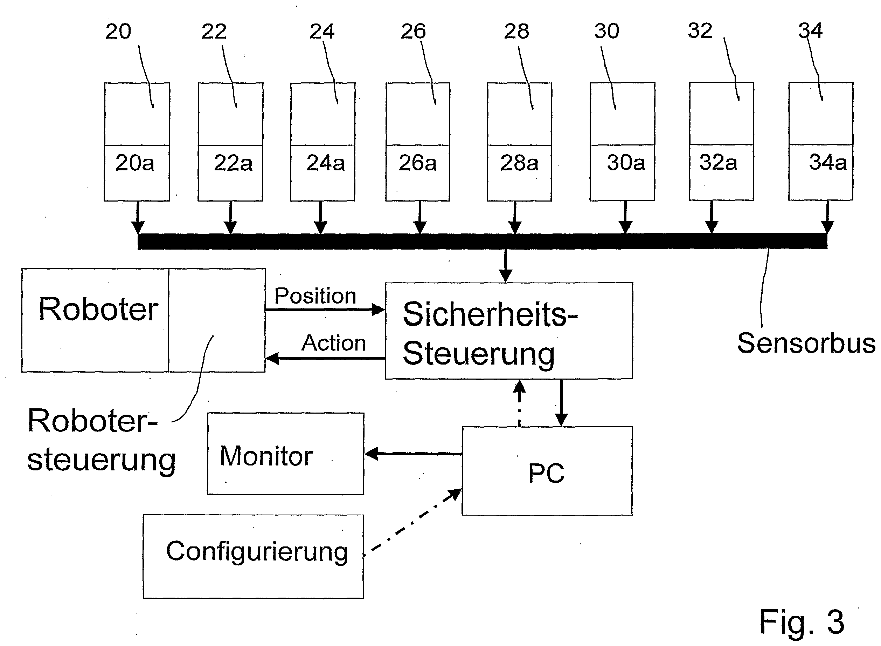

An der Basis 12 des Roboters 8 sind in einem Halbkreis zur Zugangsseite 6 hinweisend acht berührungslose Näherungssensoren 20, 22, 24, 26, 28, 30, 32, 34 angebracht, die nach dem Ultraschallprinzip arbeiten. Der Detektionsbereich jedes dieser UltraschallNäherungssensoren ist durch einen keulenartigen Sektor S1, S2, S3, S4, S5, S6, S7, S8 festgelegt, der einen Öffnungswinkel von etwa 30° aufweist. Jeder der UltraschallNäherungssensoren besitzt eine Sensor-Elektronik, siehe 20a, 22a, 24a, 26a, 28a, 30a, 32a, 34a in Fig. 3, mittels derer die Gegenwart eines Objektes innerhalb des dem Sensor zugeordneten Detektionsbereich erkannt sowie dessen Abstand zum Sensor festgestellt werden kann. Die Sensor-Elektronik erzeugt ein gemäß einem beliebigen Industriestandard (z.B. 0 - 10V, 4 - 20mA) standardisiertes Ausgangssignal, das die beiden gerade genannten Informationen enthält (nämlich eine binäre Information "Objekt vorhanden oder nicht" und eine analoge Information "Abstand des Objekts vom Sensor". Das Sensorsignal wird über einen Sensorbus, an den die Näherungssensoren angeschlossen sind, einer Sicherheitssteuerung übermittelt, siehe Fig. 3.

Fig. 3 zeigt ein Blockschaltbild der Funktionsblöcke, neben den in Fig. 1 gezeigten ? benötigt werden, um eine erfindungsgemäße Vorrichtung in einem erfindungsgemäßen Verfahren zu betreiben.

Die Sensorelektronik ist weiterhin so gestaltet, dass sie es ermöglicht, bestimmte festlegbare Entfernungsbereiche zu blenden. Das heißt, wenn sich ein Objekt in einem solcher Art vorher bestimmten Ausblendbereich befindet, so wird von der Sensorelektronik kein entsprechendes Signal über den Sensorbus über die Sicherheitssteuerung weitergegeben.

An der Basis 12 des Roboters 8 ist zur Rückwärtigen Begrenzungseinrichtung 4 hinweisend ferner ein Scanner 36 angebracht. Dieser Laserscanner 36 überwacht den rückwärtigen Teil des Arbeitsraumes 40 des Roboters 8, der zwischen dem Roboter 8 und der rückwärtigen Begrenzungseinrichtung 4 liegt. Der Detektionsbereich des Laserscanners 36 ist in etwa ein halbkreisförmiger Bereich des Neuen. ? Der Laserscanner 36 ist ein orts- und zeitauflösender Sensor.

Die Detektionsbereiche der Näherungssensoren 20, 22, 24, 26, 28, 30, 32, 34 und des Laserscanners 36 sind so gewählt, dass die äußeren Begrenzungslinien der keulenartigen Sektoren S1, S2, S3, S4, S5, S6, S7, S8 und die halbkreisförmige Begrenzung des Detektionsbereiches S9 des Laserscanners 36 zusammengenommen in etwa die Sicherheitsbereichs - Grenzlinie 42 abdecken.

Nun soll derjenige Teil des Sicherheitsbereiches 44 betrachtet werden, der in oben beschriebener Weise durch die Detektionsbereiche der Ultraschallnäherungssensoren 20 bis 34 abgedeckt wird. Durch die Gefahrenbereichs - Grenzlinie 46 wird jeder Sektor eines Ultraschallnäherungssensors in zwei Zonen unterteilt. So wird beispielsweise der Sektor S1 des Ultraschallnäherungssensors 20 in eine äußere Sicherheitszone A und eine innere Gefahrenzone I unterteilt. Entsprechendes gilt für die weiteren Sensoren. Der Sektor S2 des Sensors 22 wird also in die äußere Sicherheitszone B und die innere Gefahrenzone K unterteilt, der Sektor S3 des Sensors 24 in die äußere Sicherheitszone C und die innere Gefahrenzone L, der Sektor S4 des Sensors 26 in die äußere Sicherheitszone D und die innere Gefahrenzone M, der Sektor S5 des Sensors 28 in die äußere Sicherheitszone E und die innere Gefahrenzone N, der Sektor S6 des Sensors 30 in die äußere Sicherheitszone F und die innere Gefahrenzone O, der Sektor S7 des Sensors 32 in die äußere Sicherheitszone G und die innere Gefahrenzone P, sowie der Sektor S8 des Sensors 34 in die äußere Sicherheitszone H und die innere Gefahrenzone Q.

Die Position des Roboterarmes mit dem Werkzeug 10 bezogen auf die jeweilige Gefahrenzone I, K, L, M, N, O, P, Q, wird der Sicherheitssteuerung von Positionssensoren, die am Roboterarm oder anderen Roboterachsen angebracht sind, übermittelt.

Das erfindungsgemäße Verfahren wird nun durch Zusammenschau der Figuren 1 und Fig. 3 erläutert. In der in Fig. 1 gezeigten Konfiguration befindet sich ein Mensch ME in der Zone B, welches im Sektor S2 des Sensors 22 zugeordnete äußere Sicherheitszone ist. Das Werkzeug 10 des Roboters 8 befindet sich in der Zone P, welches die dem Sektor S7 des Sensors 32 zugeordnete Gefahrenzone ist. Die Sicherheitssteuerung erhält von der Robotersteuerung Positionsangaben über die Position des Werkzeugs 10 sowie von der von den Sensorelektronikbaugruppen 20 a bis 34 a Informationen, ob sich in den den Ultraschallnäherungssensoren zugeordneten Zonen jeweils Gegenstände befinden oder nicht, sowie in welchem Abstand diese sich befinden. Aus den ihr von der Sensorelektronik 22 a des Näherungssensors 22 übermittelten Signalen erkennt die Sicherheitssteuerung, dass sich in Sicherheitsbereich B ein Objekt befindet. In der Robotersteuerung erhält die Sicherheitssteuerung die Information, dass sich das Werkzeug 10 des Roboterarms des Roboters 8 in der Zone P befindet. Aufgrund der Programmierung weiß die Sicherheitssteuerung, dass Zonen B und Zone P ausreichend weit voneinander entfernt sind, so dass, auch sogar wenn das in Zone B erkannte Objekt ein Mensch wäre, für diesen Momentan keine Gefahr besteht, mit dem Roboterarm und dem Werkzeug 10 zu kollidieren. Die Sicherheitssteuerung wird also nichts unternehmen, der Roboter 8 arbeitet normal weiter.

Der Sensor 32 meldet über seine Sensorelektronik 32 a der Sicherheitssteuerung, dass sich in der Zone P, also der ihm zugeordneten Gefahrenzone, ebenfalls ein Objekt befindet, nämlich das Werkstück 18, dass den Roboter über die Werkstückzuführeinrichtung 16 zur Bearbeitung zugeführt wird. Aufgrund eines vor Inbetriebnahme der Fertigungszelle durchgeführten Trainingslaufes wurde der Sicherheitssteuerung jedoch die Information einprogrammiert, dass erkannte Objekte in den Zonen P und G Werkstücke sind, die über das Förderband 16 zur Bearbeitung zugeführt werden. Daher wird die Sicherheitssteuerung nichts unternehmen, wenn in Zone P ein Objekt erkannt wird. Die Zone P ist geometrisch so gestaltet, dass neben dem Förderband 16 und dem Werkstück 18 kein Platz für einen Menschen ist, so dass es nicht vorkommen kann, dass sich ein Mensch in Zone P aufhält und durch den Roboterarm gefährdet wird.

Würde sich der Mensch ME aus der Zone B über die Zonen C, D, E in die Zone F bewegen, so würde diese Bewegung von den Sensoren 24, 26, 28 und 30 erkannt und der Sicherheitssteuerung übermittelt. Wenn der Mensch in Zone F angelangt ist, und der Roboterarm mit dem Werkzeug 10 weiterhin in Zone P arbeitet, so würde die Sicherheitssteuerung veranlassen, dass der Roboter in einen verlangsamten Sicherheitsmodus übergeht, um eine Gefährdung des Menschen auszuschließen, falls dieser sich nun aus der Zone F überraschend in die Zone O bewegen sollte, in welcher er akut gefährdet wäre.

Geht der Mensch ME aus der Zone B weiter in die Zone K, welches die Gefahrenzone in Sektor 2 ist welche vom Sensor 22 überwacht wird, so wird Sensor 22 der Sicherheitssteuerung die Information übermitteln, dass in seiner Gefahrenzone K sich ein Objekt befindet. Da dieses Objekt gemäß dem der Sicherheitssteuerung eingegebenen Programm ein Mensch sein könnte, aber Zone K noch hinreichend weit von der Zone P in der sich der Roboterarm zur Zeit befindet entfernt ist, wird die Sicherheitssteuerung lediglich veranlassen, dass ? in einen verlangsamten Sicherheitsmodus übergeht, um eine Gefährdung eines Menschen in Zone K auszuschließen. Wenn sich der Mensch aus der Zone K dem Roboterarm und dem Werkzeug 10 weiter nähern würde, also über die Zonen L, M und N auf Zone O sich zu bewegen, dann würde die Sicherheitssteuerung spätestens bei Erkennen eines Objektes in Zone N den Roboter zum Stillstand bringen.

Aus der oben beschriebenen Verfahrensweise wird ersichtlich, dass mit der erfindungsgemäßen Sicherungsvorrichtung ein wesentlich flexibleres betreiben der Fertigungszelle möglich ist, als mit herkömmlichen Sicherheitsvorrichtungen. Eine Unterbrechung des Roboterbetriebes oder auch eine Verlangsamung des Roboters wird erst dann veranlasst, wenn tatsächlich sich ein Mensch in unmittelbarer Nähe des Roboterarmes mit dem Werkzeug 10 befindet. Wenn sich der Roboterarm dreht und das Werkzeug 10 beispielsweise nun aus dem Sektor P sich auf die Zone L oder sogar K zu bewegt, würde entsprechend von der Sicherheitssteuerung reagiert. Bei einer herkömmlichen Sicherheitsvorrichtung wäre entweder die Gefahrenbereichsgrenzlinie 46 durch einen festen mechanischen Zaun realisiert, was es verbieten würde, dass ein Mensch ME in dieser Zone, auch wenn er weit entfernt vom Roboterarm sich aufhält, überhaupt arbeiten kann.

Die Näherungssensoren 20, 22, 24, 26, 28, 30, 32, 34 wurden bei der Vorrichtung gemäß Fig. 1 und Fig. 3 als Ultraschallsensoren beschrieben. Ebenso gut könnten es aber auch Mikrowellensensoren sein. Erfindungsgemäß sind Näherungssensoren unterschiedlichen Wirkprinzips vorgesehen, insbesondere eine Kombination aus Mikrowellen und Ultraschallsensoren.

Der rückwärtige Raum zwischen Roboter und rückwärtiger Begrenzungseinrichtung 4 wird ganzflächig durch den Laserscanner 36 abgedeckt, wie bereits oben erwähnt. Da der Laserscanner 36 orts- und zeitaufgelöst ist, wird bei ihm über eine recht komplizierte Signalverarbeitung, welche in etwa wie ein Bildverarbeitungsalgorithmus funktioniert, in der gesamten Fläche Position von dort erkannten Objekten errechnet und an die Sicherheitssteuerung diese Information übermittelt. Der Vorteil des Laserscanners besteht darin, dass man nur ein Gerät braucht um einen relativ großen Bereich komplett abdecken zu können. Dies erkauft man sich jedoch mit dem Nachteil der erheblich größeren Kosten für den Laserscanner und der wesentlich größeren Komplexität der erforderlichen Sensorauswertealgorithmik und Elektronik. Ebenso gut könnte der rückwärtige Raum bei der Vorrichtung gemäß Fig. 1 auch durch weitere acht nach rückwärts orientierte Näherungssensoren abgedeckt sein. In der Fig. 3 ist neben der bereits besprochenen Sicherheitssteuerung dem Roboter mit der Robotersteuerung und der Wechselwirkung zwischen Sicherheitssteuerung über den mit Aktion bezeichneten Pfeil mit der Robotersteuerung, sowie die Meldung der Roboterarmposition vom Positionssensoren, in Fig. 3 angedeutet durch den mit Position bezeichneten Pfeil zwischen Robotersteuerung und Sicherheitssteuerung, weiterhin wird ein PC gezeigt, der mit der Sicherheitssteuerung in Verbindung steht, und weiterhin ein mit dem PC verbundener Monitor zur Anzeige und Darstellung der aktuellen Sicherheitssituation in der Fertigungszelle, sowie ein mit Konfigurierung bezeichnetes Konfigurierungswerkzeug. Das Konfigurierungswerkzeug dient dazu, über den PC die Sicherheitssteuerung zu konfigurieren das heißt, das heißt zu programmieren und Parameter wie beispielsweise Detektionsschwelle, Empfindlichkeit, örtliche Auflösung der Sensoren, Detektionsschwelle etc. der Sicherheitssteuerung zu übermitteln. Auf diese Weise ist die Sicherheitsvorrichtung, deren physikalischer Aufbau in Fig. 1 und deren logisch systematischer Aufbau in Fig. 3 gezeigt ist, äußerst flexibel einsetzbar und an veränderte Umgebungsbedingungen anpassbar. Das macht sich insbesondere dann vorteilhaft bemerkbar, wenn der Roboter 8 an einem neuen Arbeitsort eingesetzt werden würde. Denn zusammen mit dem Roboter 8 und seiner Basis 12 würden ja die Sicherheitssensoren 20, 22, 24, 26, 28, 30, 32, 34, 36 mit verschoben. An dem neuen Arbeitsort würde dann lediglich eine angepasste Konfigurierung der Sicherheitssteuerung nötig sein, und der Roboter könnte nach kurzer Zeit mit ungeschmälerter Sicherheit weiter arbeiten. Bei herkömmlichen Systemen müsste hingegen der mechanische Sicherheitszaun neu erstellt und einjustiert werden, oder eine Überwachungskamera im Raum außerhalb des Roboters müsste neu installiert und einjustiert werden, was erheblich komplizierter ist.

Die Erfindungsgemäße Vorrichtung und das Verfahren sind zudem für Anwendungen geeignet, bei denen Prozesslicht, wie zum Beispiel UV-Strahlung durch Schweißarbeiten entsteht, und üblicherweise eine Schutzwand erforderlich ist. Erfahrungsgemäß können auch solche Schutzwände entfallen.

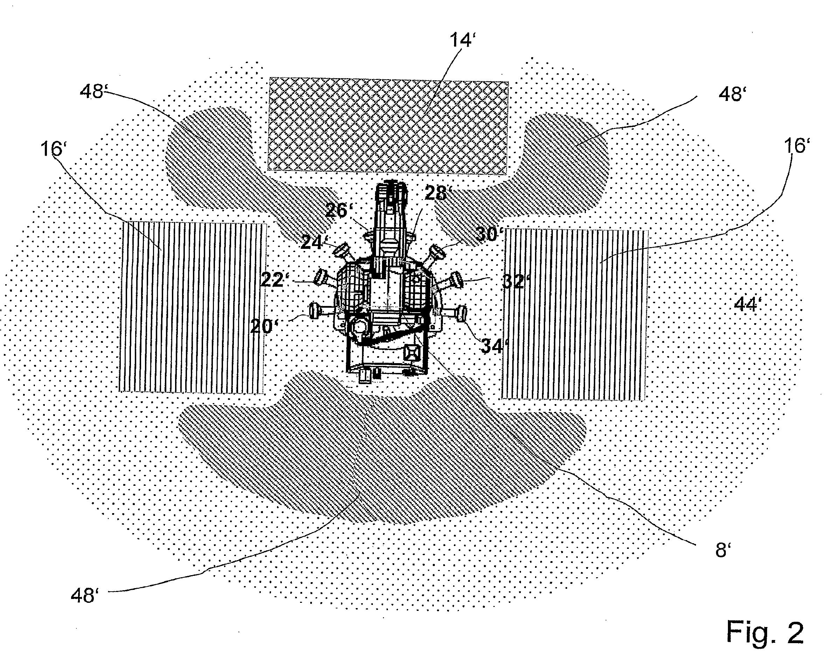

Fig. 2 schließlich zeigt in schematischer Form, dass die geometrische Form der Sicherheitszonen und der Gefahrenzonen nicht auf die Kreis- oder Kreissegmentsform nach Fig. 1 beschränkt ist. Gleiche Elemente und Komponenten in den Fig. 1 und 2 sind mit den gleichen Bezugsziffern bezeichnet, in Fig. 2 ergänzt durch einen Apostroph. In der physikalischen Anordnung einer Sicherheitsvorrichtung gemäß Fig. 2 ist der Sicherheitsbereich 44 - um den Roboter 8 - elypsenförmig ausgebildet. Es sind zwei Zuführeinrichtungen 16 - rechts und links vom Roboter 8 - angeordnet, sowie eine Werkzeugstation 14 - im hinteren Bereich des Roboters. Der Roboter 8 - trägt auch wieder acht Näherungssensoren, wahlweise als Ultraschall oder Mikrowellensensor ausgebildet, und mit 20 -, 22 -, 24 -, 26 -, 28 -, 30 -, 32 -, 34 - bezeichnet. Diesen Näherungssensoren ist auch wieder jeweils eine Sensorauswertelektronik zugeordnet, die gemäß der Fig. 3 über einen Sensorbus mit der Sicherheitssteuerung wechselwirkt. Die Detektionsbereiche der Sicherheitssensoren 20 -, 22 -, 24 -, 26 -, 28 -, 30 -, 32 -, 34 - sind nun über ihre Sensorelektronik und die Sicherheitssteuerung so eingestellt, dass die in Fig. 2 gezeigten Gefahrenzonen 48 -, die durchaus unregelmäßig geformt sind und sich im wesentlichen zwischen dem Roboter 8 und den Fördereinrichtungen 16 - bzw. der Werkzeugstation 14 - erstrecken, erfasst und abgedeckt werden. Eine erfindungsgemäße Vorrichtung ist in der Lage, durch Ausblenden entsprechender Detektionszonen durch die Sensorelektronik auch solche unregelmäßigen Gefahrenzonen auf einfache und kostengünstige Weise zuverlässig abzudecken.

## Patentansprüche

1. Vorrichtung zur Sicherung eines Industrieroboters mit einer Basis und relativ zur Basis beweglichen Teilen, die Vorrichtung aufweisend:
eine Sicherheitssensorik zur Detektion von Objekten im Arbeitsraum des Industrieroboters, und
eine Sicherheitssteuerung, die mit einer Handhabungssteuerung des Industrieroboters zusammenwirkt und dabei in Abhängigkeit von Signalen der Sicherheitssensorik sicherheitsrelevante Handhabungsgeräte-Funktionen steuert,
wobei die Sicherheitssensorik berührungslose Näherungssensoren umfasst, so dass ein sicherheitsrelevanter Teil des Arbeitsraumes des Industrieroboters durch die Detektionsbereiche der Näherungssensoren erfasst wird, und
wobei die Näherungssensoren an der Basis des Industrieroboters derart angeordnet sind, dass der Arbeitsraum des Industrieroboters von der Basis ausgehend von innen nach außen überwacht wird;
wobei der sicherheitsrelevante Teil des Arbeitsraumes in Sektoren unterteilt ist,
wobei jedem Sektor ein berührungsloser Näherungssensor oder ein orts- und zeitauflösender Sensor als Sektorüberwachungssensor zugeordnet ist, dessen Detektionsbereich mit dem ihm zugeordneten Sektor korrespondiert, und
wobei jeder einem Näherungssensor zugeordnete Sektor in wenigstens zwei Zonen unterschiedlicher Sicherheitsrelevanz unterteilt ist,
wobei die Sicherheitsrelevanz mit dem Abstand von den beweglichen Teilen korrespondiert; und
wobei die Näherungssensoren (20, 22, 24, 26, 28, 30, 32, 34, 36) eine Kombination von Sensoren unterschiedlicher physikalischer Wirkprinzipien aufweisen, insbesondere bildgebende Sensoren, Mikrowellen Sensoren und/oder Radar.

2. Vorrichtung nach Anspruch 1, **dadurch gekennzeichnet, dass** die Sicherheitssensorik eine Kombination aus orts- und zeitauflösenden Sensoren und berührungsfreien Näherungssensoren umfasst.

3. Vorrichtung nach Anspruch 2, **dadurch gekennzeichnet, dass** die Sicherheitssensorik eine Kombination aus orts- und zeitauflösenden Sensoren, berührungsfreien Näherungssensoren und mechanischen Endschaltern oder Kontaktmatten umfasst.

4. Vorrichtung nach einem der vorgenannten Ansprüche, **dadurch gekennzeichnet, dass** die Näherungssensoren Informationen über das Vorhandensein eines Objektes in ihrem jeweiligen Detektionsbereich und über den Abstand des Objektes vom jeweiligen Sensor an die Sicherheitssteuerung übermitteln.

5. Vorrichtung nach Anspruch 4, **dadurch gekennzeichnet, dass** die Näherungssensoren Informationen über das Vorhandensein eines in ihrem Detektionsbereich sich befindlichen Objektes bei der Übermittlung an die Sicherheitssteuerung unterdrücken, wenn das Objekt sich in einem bestimmten zugelassenen Abstandsbereich von dem Näherungssensor befindet.

6. Vorrichtung nach einem der Ansprüche 1 bis 3, **dadurch gekennzeichnet, dass** die Näherungssensoren Näherungsschalter mit variabel einstellbaren Schaltabständen sind, so dass sie Informationen über das Vorhandensein eines Objektes in ihrem jeweiligen Überwachungsbereich und in einer dem jeweils eingestellten Schaltabstand entsprechenden Entfernung von dem Näherungssensor an die Sicherheitssteuerung übermitteln.

7. Vorrichtung nach einem der vorangehenden Ansprüche, **dadurch gekennzeichnet, dass** jeder einem Näherungssensor zugeordnete Sektor in eine Arbeitszone, eine Sicherheitszone und eine Gefahrenzone unterteilt ist, derart, dass bei Anwesenheit eines Menschen in der Gefahrenzone der Industrieroboter ausgeschaltet wird, und bei Anwesenheit eines Menschen in der Sicherheitszone des Industrieroboters in eine verlangsamte Sicherheitsbetriebsweise übergeht.

8. Vorrichtung nach einem der vorigen Ansprüche, **dadurch gekennzeichnet, dass** die Näherungssensoren Ultraschallsensoren umfassen.

9. Vorrichtung nach einem der vorherigen Ansprüche, **dadurch gekennzeichnet, dass** die Näherungssensoren Mikrowellensensoren umfassen.

10. Vorrichtung nach Anspruch 9, **dadurch gekennzeichnet, dass** Informationen über die Position des Industrieroboterarmes von positionsgebenden Sensoren am Industrieroboter, insbesondere an den Industrieroboterachsen, erfasst und an die Sicherheitssteuerung übermittelt werden.

11. Verfahren zur Sicherung eines Industrieroboters mit einer Basis und relativ zur Basis beweglichen Teilen,
wobei eine Sicherheitssensorik zur Detektion von Objekten im Arbeitsraum des Industrieroboters eingesetzt wird, derart, dass eine Sicherheitssteuerung mit der Industrierobotersteuerung zusammenwirkt und von der Sicherheitssteuerung in Abhängigkeit von Signalen der Sicherheitssensorik sicherheitsrelevante Industrieroboter-Funktionen gesteuert werden, und wobei die Sicherheitssensorik eine Kombination von berührungslosen Sensoren unterschiedlicher physikalischer Wirkprinzipien aufweist, insbesondere bildgebende Sensoren, Mikrowellen Sensoren und/oder Radar berührungslose Näherungssensoren;
wobei zonenweise Informationen über die Anwesenheit von Personen und/oder Objekten im Arbeitsraum des Industrieroboters von der Sicherheitstechnik ermittelt und von der Sicherheitssteuerung übermittelt werden,
wobei zonenweise Informationen über die Position der beweglichen Teile des Industrieroboters von dem Industrieroboter an die Sicherheitssteuerung übermittelt werden, und
wobei von der Sicherheitssteuerung im Zusammenwirken mit der Industrierobotersteuerung in Abhängigkeit von den beiden Informationen zonenweise sicherheitsrelevante Industrieroboter-Funktionen gesteuert werden, **dadurch gekennzeichnet,**
**dass** der Arbeitsraum des Industrieroboters in Sektoren und jeder Sektor weiter in wenigstens zwei Zonen unterschiedlicher, mit dem Abstand von dem beweglichen Roboterarm korrespondierender Sicherheitsrelevanz unterteilt ist, und
**dass** Informationen über die Position des Industrieroboterarmes von Positionssensoren an den Industrieroboterachsen erfasst und an die Sicherheitssteuerung übermittelt werden.

12. Verfahren nach Anspruch 11, **dadurch gekennzeichnet, dass** jeder Sektor in eine Arbeitszone, eine Sicherheitszone und eine Gefahrenzone unterteilt wird, und dass bei von der Sicherheitssensorik erkannter Anwesenheit eines Menschen in der Gefahrenzone der Industrieroboter ausgeschaltet wird, und bei Anwesenheit eines Menschen in der Sicherheitszone der Industrieroboter von der IndustrieroboterSteuerung in eine verlangsamte Sicherheitsbetriebsweise gesteuert wird.

13. Verfahren nach Anspruch 12, **dadurch gekennzeichnet, dass** bei von der Sicherheitssensorik erkannter Anwesenheit eines Menschen in einer Sicherheitszone und gleichzeitiger von den Positionssensoren erfasster Positionierung des Industrieroboterarmes in derselben oder einer benachbarten Sicherheitszone der Industrieroboter von der Roboter-Steuerung in eine verlangsamte Sicherheitsbetriebsweise gesteuert wird.

14. Verfahren nach einem der Ansprüche 11 bis 13, **dadurch gekennzeichnet, dass** von der Sicherheitssensorik an die Sicherheitssteuerung übermittelte Informationen über Objekte aus einer Sicherheits- oder Gefahrenzone, in der sich der Industrieroboterarm befindet, von der Sicherheitssteuerung ausgeblendet werden.

15. Verfahren nach einem der Ansprüche 11 bis 14, **dadurch gekennzeichnet, dass** von der Sicherheitssensorik an die Sicherheitssteuerung übermittelte Informationen über Objekte aus einer Sicherheits- oder Gefahrenzone, in der sich von dem Industrieroboter zu handhabende Teile oder Zuführvorrichtungen für solche Teile befinden, von der Sicherheitssteuerung ausgeblendet werden.

16. Verfahren nach einem der Ansprüche 11 bis 15, **dadurch gekennzeichnet, dass** eine Sicherheitssensorik gemäß einem der Ansprüche 1 bis 10 verwendet wird.

17. Vorrichtung nach Anspruch 7, **dadurch gekennzeichnet, dass** die Ultraschallsensoren einen Öffnungswinkel zwischen 10° und 40°, besonders vorteilhaft zwischen 12° und 30° aufweisen, so dass der von den Ultraschallsensoren überwachte Teil des Arbeitsraumes des Industrieroboters in Sektoren mit Öffnungswinkeln zwischen 10° und 40°, in besonders vorteilhafter Weise zwischen 12° und 30° unterteilt ist.

18. Vorrichtung nach Anspruch 9, **dadurch gekennzeichnet, dass** die Mikrowellensensoren nach der FMCW (Frequency Modulated Continuous Wave)-Methode arbeiten.

19. Vorrichtung nach Anspruch 18, **dadurch gekennzeichnet, dass** die Mikrowellensensoren mechanisch schwenkbar angebracht sind und der Verschwenkungswinkel mit einem Winkelsensor erfassbar ist, derart, dass zusätzlich zu der Information über die Entfernung des Objektes noch eine Information über die Richtung, in der sich das Objekt befindet, erhalten wird.

20. Vorrichtung nach Anspruch 19, **dadurch gekennzeichnet, dass** einzelne Elemente eines Antennenarrays der Mikrowellensensoren über ein veränderliches Phasenschiebernetzwerk ansteuerbar sind, derart, dass über die Änderung der Phasen die Hauptabstrahlrichtung (Hauptkeule) der Mikrowellenantennen geschwenkt werden können und dadurch zusätzlich zu der Information über die Entfernung des Objektes noch eine Information über die Richtung, in der sich das Objekt befindet, erhalten wird.

## Claims

1. Apparatus for protecting an industrial robot with a base and parts that move relative to the base, with the apparatus having:
a safety sensor system for detecting objects in the working region of the industrial robot, and
a safety controller, which interacts with a handling controller of the industrial robot and in the process controls safety-relevant handling appliance functions in dependence on signals from the safety sensor system,
wherein the safety sensor system comprises non-contacting proximity sensors so that a safety-relevant part of the working region of the industrial robot is captured by the detection regions of the proximity sensors, and
wherein the proximity sensors are arranged on the base of the industrial robot such that the working region of the industrial robot is monitored from the inside to the outside, starting from the base;
wherein the safety-relevant part of the working region is divided into sectors,
wherein each sector is assigned a non-contacting proximity sensor or a position-resolving and time-resolving sensor as the sector monitoring sensor, whose detection region corresponds to the sector assigned thereto, and
wherein each sector which is assigned to one proximity sensor is divided into at least two zones of different safety relevance,
wherein the safety relevance corresponds to the distance from the moving parts; and
wherein the proximity sensors (20, 22, 24, 26, 28, 30, 32, 34, 36) have a combination of sensors with different physical principles of operation, in particular imaging sensors, microwave sensors and/or radar.

2. Apparatus according to Claim 1, **characterized in that** the safety sensor system comprises a combination of position-resolving and time-resolving sensors and non-contacting proximity sensors.

3. Apparatus according to Claim 2, **characterized in that** the safety sensor system comprises a combination of position-resolving and time-resolving sensors, non-contacting proximity sensors and mechanical limit switches or contact mats.

4. Apparatus according to one of the preceding claims, **characterized in that** the proximity sensors transmit information about the presence of an object in their respective detection region and about the distance of the object from the respective sensor to the safety controller.

5. Apparatus according to Claim 4, **characterized in that** the proximity sensors suppress information about the presence of an object which is located in their detection region during the transmission to the safety controller if the object is located within a specific permissible distance range from the proximity sensor.

6. Apparatus according to one of Claims 1 to 3, **characterized in that** the proximity sensors are proximity switches with variably adjustable switching distances, and consequently they transmit information about the presence of an object in their respective monitoring region and within a range which corresponds to the respectively set switching distance from the proximity sensor to the safety controller.

7. Apparatus according to one of the preceding claims, **characterized in that** each sector which is assigned to one proximity sensor is divided into a working zone, a safety zone and a danger zone in a manner such that the industrial robot is switched off if a person is present in the danger zone and is switched to a slowed-down safety mode if a person is present in the safety zone of the industrial robot.

8. Apparatus according to one of the preceding claims, **characterized in that** the proximity sensors comprise ultrasound sensors.

9. Apparatus according to one of the preceding claims, **characterized in that** the proximity sensors comprise microwave sensors.

10. Apparatus according to Claim 9, **characterized in that** information about the position of the industrial robot arm is captured by position-finding sensors on the industrial robot, in particular on the industrial robot axes, and is transmitted to the safety controller.

11. Method for protecting an industrial robot with a base and parts that move relative to the base,
wherein a safety sensor system is used for detecting objects in the working region of the industrial robot in a manner such that a safety controller interacts with the industrial robot controller, and safety-relevant industrial robot functions are controlled by the safety controller in dependence on signals from the safety sensor system, and wherein the safety sensor system has a combination of non-contacting sensors with different physical principles of operation, in particular imaging sensors, microwave sensors and/or radar non-contacting proximity sensors;
wherein information about the presence of people and/or objects in the working region of the industrial robot is ascertained zone-by-zone by the safety technical system and transmitted from the safety controller,
wherein information about the position of the moving parts of the industrial robot is transmitted zone-by-zone from the industrial robot to the safety controller, and
wherein safety-relevant industrial robot functions are controlled zone-by-zone by the safety controller in interaction with the industrial robot controller in dependence on both types of information, **characterized**
**in that** the working region of the industrial robot is divided into sectors, and each sector is further divided into at least two zones of different safety relevance, corresponding to the distance from the moving robot arm, and
**in that** information about the position of the industrial robot arm is captured by position sensors on the industrial robot axes and transmitted to the safety controller.

12. Method according to Claim 11, **characterized in that** each sector is divided into a working zone, a safety zone and a danger zone, and **in that** the industrial robot is switched off if the safety sensor system identifies the presence of a person in the danger zone, and the industrial robot controller switches the industrial robot to a slowed-down safety mode if a person is present in the safety zone.

13. Method according to Claim 12, **characterized in that** if the safety sensor system identifies the presence of a person in a safety zone and, at the same time, the position sensors capture that the industrial robot arm is positioned in the same safety zone or an adjacent safety zone, the robot controller switches the industrial robot to a slowed-down safety mode.

14. Method according to one of Claims 11 to 13, **characterized in that** information which is transmitted from the safety sensor system to the safety controller about objects from a safety zone or danger zone, in which the industrial robot arm is located, is masked out by the safety controller.

15. Method according to one of Claims 11 to 14, **characterized in that** information which is transmitted from the safety sensor system to the safety controller about objects from a safety zone or danger zone, in which parts which are to be handled by the industrial robot or supply apparatuses for such parts are located, is masked out by the safety controller.

16. Method according to one of Claims 11 to 15, **characterized in that** a safety sensor system according to one of Claims 1 to 10 is used.

17. Apparatus according to Claim 7, **characterized in that** the ultrasound sensors have a beam angle of between 10° and 40°, particularly advantageously of between 12° and 30°, such that the part of the working region of the industrial robot that is monitored by the ultrasound sensors is divided into sectors with beam angles of between 10° and 40°, in a particularly advantageous manner of between 12° and 30°.

18. Apparatus according to Claim 9, **characterized in that** the microwave sensors operate using the FMCW (frequency-modulated continuous wave) method.

19. Apparatus according to Claim 18, **characterized in that** the microwave sensors are mounted such that they are mechanically pivotable, and the pivot angle is capturable by an angle sensor in a manner such that, in addition to the information about the distance to the object, information is also obtained about the direction in which the object is located.

20. Apparatus according to Claim 19, **characterized in that** individual elements of an antenna array of the microwave sensors are able to be driven via a variable phase-shifting network in a manner such that the main emission direction (main lobe) of the microwave antennas can be pivoted by variation of the phases and thereby, in addition to the information about the distance to the object, information is also obtained about the direction in which the object is located.

## Revendications

1. Dispositif de sécurité pour un robot industriel avec une base et des parties mobiles par rapport à la base, le dispositif présentant :
des capteurs de sécurité pour la détection d'objets dans l'espace de travail du robot industriel, et
une commande de sécurité, qui coopère avec une commande de manipulation du robot industriel et qui commande en l'occurrence des fonctions de l'appareil de manipulation importante pour la sécurité en fonction de signaux des capteurs de sécurité,
dans lequel les capteurs de sécurité comprennent des capteurs d'approche sans contact, de telle manière qu'une partie importante pour la sécurité de l'espace de travail du robot industriel soit détectée par les plages de détection des capteurs d'approche, et
dans lequel les capteurs d'approche sont disposés à la base du robot industriel de telle manière que l'espace de travail du robot industriel soit surveillé de l'intérieur vers l'extérieur à partir de la base ;
dans lequel la partie importante pour la sécurité de l'espace de travail est divisée en secteurs,
dans lequel un capteur d'approche sans contact ou un capteur à résolution spatiale et temporelle est associé à chaque secteur en tant que capteur de surveillance de secteur, et sa plage de détection correspond au secteur qui lui est associé, et
dans lequel chaque secteur associé à un capteur d'approche est divisé en au moins deux zones d'importance différente pour la sécurité,
dans lequel l'importance pour la sécurité correspond à la distance des parties mobiles,
dans lequel les capteurs d'approche (20, 22, 24, 26, 28, 30, 32, 34, 36) présentent une combinaison de capteurs ayant des principes actifs physiques différents, en particulier des capteurs avec formation d'image, des capteurs à microondes et/ou un radar.

2. Dispositif selon la revendication 1, **caractérisé en ce que** les capteurs de sécurité comprennent une combinaison de capteurs à résolution spatiale et temporelle et de capteurs d'approche sans contact.

3. Dispositif selon la revendication 2, **caractérisé en ce que** les capteurs de sécurité comprennent une combinaison de capteurs à résolution spatiale et temporelle, de capteurs d'approche sans contact et d'interrupteurs de fin de course mécaniques ou de tapis de contact.

4. Dispositif selon l'une quelconque des revendications précédentes, **caractérisé en ce que** les capteurs d'approche transmettent à la commande de sécurité des informations au sujet de la présence d'un objet dans leur plage de détection respective et de la distance de l'objet par rapport au capteur respectif.

5. Dispositif selon la revendication 4, **caractérisé en ce que** les capteurs d'approche suppriment des informations au sujet de la présence d'un objet se trouvant dans leur plage de détection lors de la transmission à la commande de sécurité, lorsque l'objet se trouve dans une plage de distance autorisée déterminée du capteur d'approche.

6. Dispositif selon l'une quelconque des revendications 1 à 3, **caractérisé en ce que** les capteurs d'approche sont des interrupteurs d'approche avec des distances de coupure réglables de façon variable, de telle manière qu'ils transmettent à la commande de sécurité des informations au sujet de la présence d'un objet dans leur plage de surveillance respective et à une distance du capteur d'approche correspondant à la distance de coupure respectivement réglée.

7. Dispositif selon l'une quelconque des revendications précédentes, **caractérisé en ce que** chaque secteur associé à un capteur d'approche est divisé en une zone de travail, une zone de sécurité et une zone de danger, de telle manière qu'en cas de présence d'une personne dans la zone de danger le robot industriel soit arrêté, et qu'en cas de présence d'une personne dans la zone de sécurité du robot industriel il passe à un mode de fonctionnement de sécurité ralenti.

8. Dispositif selon l'une quelconque des revendications précédentes, **caractérisé en ce que** les capteurs d'approche comprennent des capteurs à ultrasons.

9. Dispositif selon l'une quelconque des revendications précédentes, **caractérisé en ce que** les capteurs d'approche comprennent des capteurs à microondes.

10. Dispositif selon la revendication 9, **caractérisé en ce que** des informations au sujet de la position du bras de robot industriel sont détectées par des capteurs de position sur le robot industriel, en particulier sur les axes du robot industriel, et sont transmises à la commande de sécurité.

11. Procédé de sécurité d'un robot industriel avec une base et des parties mobiles par rapport à la base,
dans lequel on utilise des capteurs de sécurité pour la détection d'objets dans l'espace de travail du robot industriel, de telle manière qu'une commande de sécurité coopère avec la commande du robot industriel et que des fonctions du robot industriel importantes pour la sécurité soient commandées par la commande de sécurité en fonction de signaux des capteurs de sécurité, et dans lequel les capteurs de sécurité présentent une combinaison de capteurs sans contact ayant des principes actifs physiques différents, en particulier des capteurs avec formation d'image, des capteurs à microondes et/ou des capteurs d'approche sans contact de type radar ;
dans lequel on détermine par zones des informations au sujet de la présence de personnes et/ou d'objets dans l'espace de travail du robot industriel au moyen de la technique de sécurité et on les transmet au moyen de la commande de sécurité, dans lequel on transmet par zones des informations au sujet de la position des parties mobiles du robot industriel par le robot industriel à la commande de sécurité et dans lequel on commande par zones des fonctions du robot industriel importantes pour la sécurité au moyen de la commande de sécurité en coopération avec la commande de robot industriel en fonction des deux informations, **caractérisé en ce que** l'espace de travail du robot industriel est divisé en secteurs et chaque secteur est en outre divisé en au moins deux zones d'importance différente pour la sécurité en correspondance avec la distance par rapport au bras de robot mobile, et **en ce que** l'on détecte des informations au sujet de la position du bras de robot industriel au moyen de capteurs de position sur les axes du robot industriel et on les transmet à la commande de sécurité.

12. Procédé selon la revendication 11, **caractérisé en ce que** chaque secteur est divisé en une zone de travail, une zone de sécurité et une zone de danger et **en ce qu'**en cas de détection par les capteurs de sécurité de la présence d'une personne dans la zone de danger on arrête le robot industriel et en cas de présence d'une personne dans la zone de sécurité on commande le robot industriel dans un mode de fonctionnement de sécurité ralenti au moyen de la commande du robot industriel.

13. Procédé selon la revendication 12, **caractérisé en ce qu'**en cas de détection par les capteurs de sécurité de la présence d'une personne dans une zone de sécurité et de détection simultanée par les capteurs de position de la position du bras de robot industriel dans la même zone de sécurité ou dans une zone de sécurité voisine, on commande le robot industriel dans un mode de fonctionnement de sécurité ralenti par la commande du robot.

14. Procédé selon l'une quelconque des revendications 11 à 13, **caractérisé en ce que** des informations transmises par les capteurs de sécurité à la commande de sécurité au sujet d'objets en provenance d'une zone de sécurité ou de danger, dans laquelle le bras de robot industriel se trouve, sont masquées par la commande de sécurité.

15. Procédé selon l'une quelconque des revendications 11 à 14, **caractérisé en ce que** des informations transmises par les capteurs de sécurité à la commande de sécurité au sujet d'objets en provenance d'une zone de sécurité ou de danger, dans laquelle se trouvent des pièces à manipuler par le robot industriel ou des dispositifs d'amenée pour ces pièces, sont masquées par la commande de sécurité.

16. Procédé selon l'une quelconque des revendications 11 à 15, **caractérisé en ce que** l'on utilise des capteurs de sécurité selon l'une quelconque des revendications 1 à 10.

17. Dispositif selon la revendication 7, **caractérisé en ce que** les capteurs à ultrasons présentent un angle d'ouverture compris entre 10° et 40°, en particulier avantageusement entre 12° et 30°, de telle manière que la partie de l'espace de travail du robot industriel surveillée par les capteurs à ultrasons soit divisée en secteurs avec des angles d'ouverture compris entre 10° et 40°, en particulier avantageusement entre 12° et 30°.

18. Dispositif selon la revendication 9, **caractérisé en ce que** les capteurs à microondes travaillent selon le procédé OCMF (OCMF - onde continue modulée en fréquence - Frequency Modulated Continuous Wave).

19. Dispositif selon la revendication 18, **caractérisé en ce que** les capteurs à microondes sont montés de façon mécaniquement pivotante et l'angle de pivotement peut être détecté avec un capteur d'angle, de telle manière qu'en plus de l'information au sujet de la distance de l'objet on obtienne encore une information au sujet de la direction dans laquelle l'objet se trouve.

20. Dispositif selon la revendication 19, **caractérisé en ce que** des éléments individuels d'un réseau d'antennes des capteurs à microondes peuvent être commandés par un réseau à déphasage variable, de telle manière que la direction de rayonnement principale (lobe principal) des antennes à microondes puisse pivoter au moyen du changement des phases et que l'on obtienne ainsi, en plus de l'information au sujet de la distance de l'objet, encore une information au sujet de la direction dans laquelle l'objet se trouve.
